Europäisches Patentamt

European Patent Office

Office européen des brevets

(19)

(11) Publication number: **0 307 531 B1**

(12) **EUROPEAN PATENT SPECIFICATION**

(45) Date of publication of patent specification: **01.04.92**

(51) Int. Cl.<sup>5</sup>: **F16L 19/06**, F16L 19/08, F16L 47/00

(21) Application number: **88100726.4**

(22) Date of filing: **20.01.88**

(54) **Sealing fittings for fluids.**

(30) Priority: **17.09.87 IT 8560287**

(43) Date of publication of application:
**22.03.89 Bulletin 89/12**

(45) Publication of the grant of the patent:
**01.04.92 Bulletin 92/14**

(84) Designated Contracting States:
**BE CH DE ES FR GB LI LU NL SE**

(56) References cited:
FR-A- 2 302 476
GB-A- 454 793
US-A- 3 219 367

(73) Proprietor: **Mastromatteo, Ciro**
**81, Via Brigata Tridentina**
**Camisano(IT)**

(72) Inventor: **Mastromatteo, Ciro**
**81, Via Brigata Tridentina**
**Camisano(IT)**

(74) Representative: **Bonini, Ercole**
**c/o STUDIO ING. E. Bonini Corso Fogazzaro, 8**
**I-36100 Vicenza(IT)**

Rank Xerox (UK) Business Services

EP 0 307 531 B1

## Description

The invention concerns the realization of sealing fittings for fluids, particularly suited for the connection of pipes. Various types of sealing fittings for fluid-conveying pipes are known.

In US-A-3 219 367 a fitting comprises a sleeve 14 made of plastic, but this sleeve is not particularly suited to seal and unseal pipes without making a permanent deformation of said pipes.

One type of execution foresees the use of a nut whithin which a moulded elastic ring is inserted, which in turn is applied on the outside of the pipe to be connected. The screwing of the nut on the body on which the sealing of the pipe will be performed, for instance a nipple, a hose connector, a fitting or other, causes the radial compression of the ring against the pipe and thus insures the water seal and the mechanical tightness of the pipe on the above-mentioned body.

Moreover, in the inner part coming into contact with the pipe, the elastic rings of the known type present some ring-shaped grooves with a gripping profile in the shape of saw-teeth, the purpose of which is to prevent the sealing pipe from slipping out once the sealing has been carried out.

In order to prevent the pipe from slipping out, it is necessary to insert the elastic moulded ring into the nut and then to fit it inside the pipe with the side presenting the saw-teeth in the direction contrary to the pipe slippage direction, so as to allow it to perform a gripping action.

The just-described fittings of the known type, together with the undoubtable advantages, which consist in the performance of a secure tightness between the connected elements and in the guarantee of an absolute water seal, present also some drawbacks.

The main drawback consists in the fact that the elastic ring is symmetrical and, if, during the assembly, it were inserted within the nut and then fitted into the pipe in the wrong way, i.e. with the saw-tooth shaped side pointed in the slippage direction of the pipe, the mechanical tightness would not be guaranteed. In fact, should this be the case, the saw-teeth would no longer perform a gripping action and thus the slipping out of the sealing pipe would be possible.

A second drawaback is due to the fact that during the assembly the operator faces the necessity of handling, for each sealing he needs to perform, two pieces which are separate from each other, namely the elastic moulded ring and the nut, within which it must be inserted, with a consequent loss of time.

Yet another drawback is due to the fact that during the nut-tightening operation, a swelling of the pipe usually occurs; this interferes with the outer edge of the nut and damages the pipe when rotating against it.

Another drawback consists in the fact that, during the tightening of the nut, especially during the final blocking phase, a torsion is transmitted to the pipe, since the elastic moulded ring inserted within it has a tendency to follow it in the rotation, rather than sliding on it.

The goal of the present invention is that of overcoming the mentioned drawbacks.

One of the goals which the invention intends to achieve is the realization of sealing fittings where the elastic ring and the nut are pre-assembled before the final assembly, so as to eliminate the chance that the wrong insertion of the elastic ring by the operator may allow the slippage of the connected pipe.

Another goal proposed by the invention is the realization of sealing fittings, where it is impossible to assemble the ring into the nut in the wrong way, because of the geometrical shape of the fittings themselves.

Yet another goal of the invention is to obtain fittings permitting junctions while completely eliminating the possibility of damaging the pipes by making a permanent deformation of the pipe interior during the tightening of the sealing fitting.

Another goal that the realization of the invention intends to reach is to reduce the number of pieces which the operator needs to handle while performing the connections.

Not the least goal proposed by the invention is to reduce the assembly time.

All the above-mentioned goals are reached by the realization of sealing fittings for fluid-conveying pipes, the main characteristics of which are according to claim 1 of the present invention.

The main advantage of the invention is that the fitting of the invention connects and seals the pipe without making a permanent deformation in the interior of the pipe. This effect is reached by means of an elastic sealing ring provided with two different slanted ring-shaped surfaces which transmit the pressure during the tightening of the sealing fitting. Other characteristics and constructive details will be better illustrated in the description of preferred forms of execution of the invention, which are given by way of illustration only, and which are represented in the drawings, where:

- Fig. 1 represents the cross-section of the sealing fitting according to the invention, which is particularly suited for non-metallic and flexible pipes;
- The Figs. from 2 to 4 represent the components of the sealing fitting of Fig. 1;
- Fig. 5 represents the cross-section of a sealing fitting according to the invention, which is particularly suited for metal pipes;

- The Figs. from 6 to 8 represent the components of the sealing fitting of Fig. 5;
- Fig. 9 represents a variation of execution of the sealing fitting of Fig. 5 in section;
- The Figs. from 10 to 13 represent the components of the sealing fitting of Fig. 9;
- Fig. 14 represents the cross-section of the same solution idea for a sealing fitting particularly suited for the connection with plates or collectors;
- the Figs. from 15 to 17 represent the components of the fitting of Fig. 14.

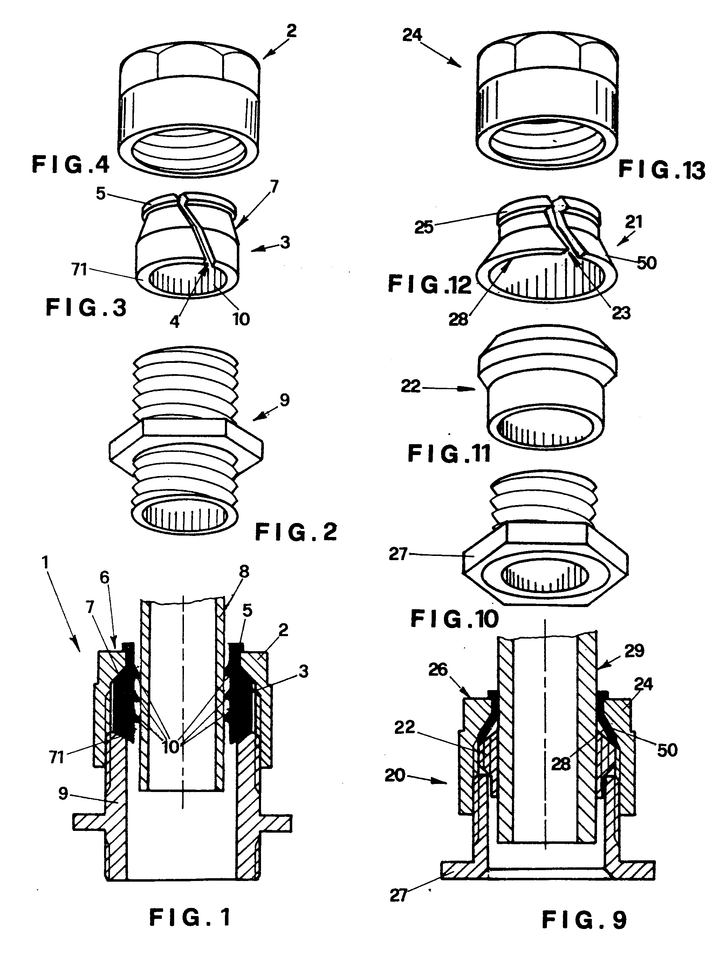

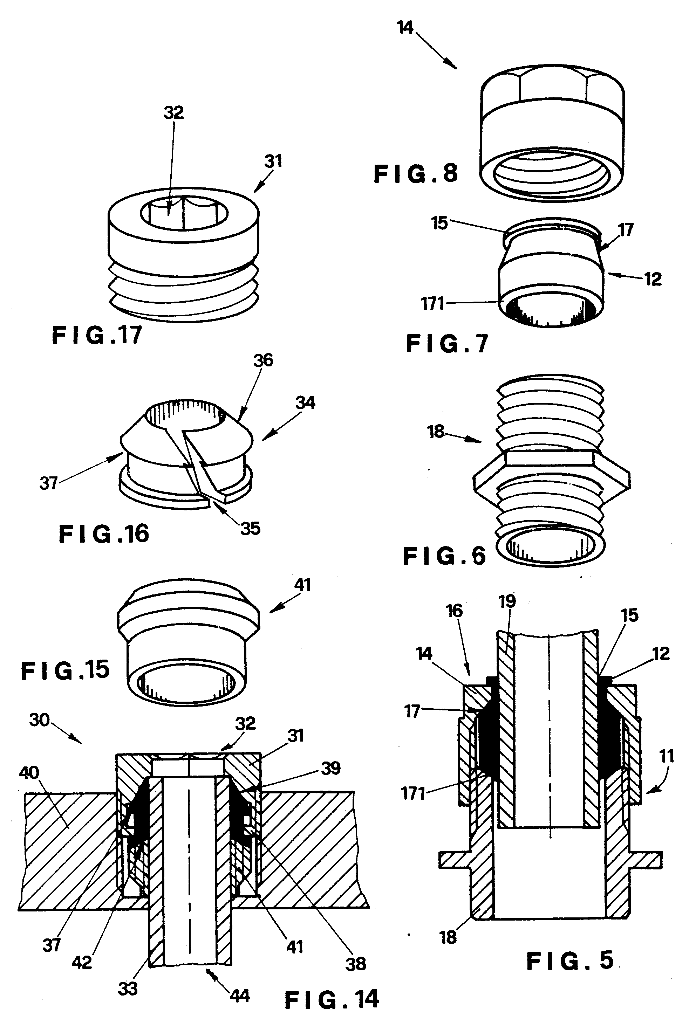

As can be observed in Fig. 1, the sealing fitting which is indicated as a whole with 1, consists of a nut 2 and of a moulded metal ring 3. On the outer surface of the ring, there is a slit 4, arranged inclined in relation to its axis, lending to the ring elasticity in the radial direction, which makes it easy to assemble it inside nut 2.

In order to assemble the metal elastic ring 3 inside nut 2, it is pressed radially by means of moulded pincers and it is let go once it has been inserted inside nut 2.

Collar 5 of the elastic ring 3 leans against the upper flat surface 6 of nut 2, thus creating the interference suited to maintain the permanent coupling between ring 3 and the above-mentioned nut 2.

It can also be observed that nut 2, ring 3 and nipple 9 are also in contact with each other by means of two couples of joined slanted round surfaces 7 and 71, which fulfil the purpose of transforming part of the force, which exerts itself on the elastic ring 3 when nut 2 is tightened around nipple 9, into a radial force sealing ring 3 against pipe 8, with which it is connected. It is this radial force which ensures the mechanical tightness and the seal on pipe 8.

Inside the elastic ring 3 and in correspondence with its inner surface which is in contact with the outer surface of pipe 8, there are one or more round grooves with a saw-tooth profile 10, fulfilling the purpose of preventing the slippage of pipe 8, should this undergo an axial stress exerted in that direction. In fact, since the tightening of nut 2 radially stresses the elastic ring 3 against pipe 8, the saw-teeth 10 penetrate into its outer, surface. If the sharp part of said saw teeth 10 is pointed in the direction contrary to the slippage direction of pipe 8, the slippage itself is prevented.

On the basis of what has been described, it is easy to understand how important it is that the elastic ring 3 be correctly assembled within nut 2, so that the saw-teeth 10 may perform efficiently their gripping action.

Thus the advantage of pre-assembling the elastic ring 3 into nut 2 before the installation becomes evident; this will prevent a human assembly error during the lay-out from causing inconveniences.

Besides, since the elastic ring 3 and nut 2 being the object of the invention have a single direction of assembly, thanks to the presence of the corresponding surfaces 7, any possibility of error in the assembly between the elastic ring 3 and nut 2 is eliminated.

It is then obvious how the main goal of the invention has been achieved.

Moreover the further goal concerning the operator's handling of a single piece, rather than two pieces, namely ring 3 and nut 2, separated from each other, is also achieved.

Still observing Fig. 1 it can be understood that, during the tightening operation of nut 2 on nipple 9, pipe 8 can not come into contact with nut 2, since between nut 2 and pipe 8 there is the upper part of ring 3 ending with collar 5 which acts as a protection.

Thus the other goal of obtaining a sealing fitting which does not damage pipe 8 during the tightening of nut 2 is also achieved.

Since, during the tightening operation, nut 2 rotates freely around the upper part of the elastic ring 3, which, on the contrary, remains still on pipe 8 against which it is sealed, the further goal of avoiding the transmission to pipe 8 of torsion moments during the sealing operation is also reached.

Should pipe 19 be made of metal material, either ferrous or non-ferrous, the sealing fitting 11 represented in Fig. 5 can purposefully be employed; using the same inventive idea, this solution obtains the sealing by employing a ring 12 made of plastic material, for instance teflon.

This plastic ring 12, too, is introduced by means of pincers into nut 4, so as to remain permanently bound to it.

In an analogous way, the connection between nut 14 and the plastic ring 12 is made stable thanks to the presence on ring 12 of collar 15, which, besides preventing its slippage by interfering with the flat surface 16 of nut 14, also protects pipe 19 from the abrasion of nut 14, when the latter is screwed on nipple 18.

In this case, too, the radial compression of ring 12, insuring the mechanical tightness of the seal on pipe 19 is caused by the presence of the two couples of slanted surfaces 17 and 171.

In Fig. 5 it will be observed that the plastic ring 12 does not present on its inner surface being in contact with the outer surface of pipe 19 any tooth; this is the case because ring 12 being made of plastic and pipe 19 of metal, the difference between the two materials is such as to guarantee the mechanical tightness and the seal as well as the security against the pipe slippage.

The just-described sealing fitting 11, as well as the previously described fittings, reaches the goals of insuring pipe 19 against damage due to grinding against nut 14 during the tightening operation and of avoiding, at the same time, the transmission of torsion stresses.

Fig. 9 shows the sealing fitting, indicated as a whole with 20. It concerns a variation of solution of the sealing fitting 11 and it is also suited for the connection of metal pipes.

Said solution variation differs from the previously illustrated one because of the presence of an elastic metal ring 21 having the shape of a truncated cone and because of the interposition of a moulded sealing bushing, made of plastic material, of the known type.

In this solution the elastic metal ring 21, just as the one previously described, presents slit 23, giving it sufficient elasticity so that it can be inserted within nut 24 by means of pincers.

In this case, too, the presence of collar 25 contrasting with the flat upper surface 26 of nut 24 prevents the slippage of ring 21 from nut 24, once the assembly between the two components has been carried out.

When nut 24 is being tightened around nipple 27, it pushes ring 21 along surface 50, while, at the same time, the inner tapered part 28 of the elastic ring 21 radially compresses the plastic bushing 22 against the outer surface of pipe 29, in such a way that, once the tightening has been carried out both the sealing and the mechanical tightening are guaranteed.

In this case, too, no saw-tooth indentations are present on the inner surface of bushing 22 being in contact with the outer surface of pipe 29, and this because the difference between the materials constituting the elastic bushing 22 and pipe 29 suffices to guarantee the safety against the slippage of pipe 29.

In thermohydraulic installations or for the conveyance of fluids in general, the necessity of performing a sealing between a pipe and the inside of a container is not infrequent. This is the typical case presenting itself when a pipe must be connected with the inside of a collector or of a fitting.

The performance of such a type of seal is represented in Fig. 14, where sealing fitting 30 can be observed, based on the same idea of solution as the sealing fittings 1, 11, 20, seen so far.

The sealing fitting 30 consists of a screw 31, provided with a through central hexagon 32 fulfilling the double purpose of allowing the insertion of an operating key and of allowing the passage of the fluid conveyed by pipe 33.

A metal ring 34 provided with a slanted slit 35, suited to lend it elasticity, so that it can be radially compressed by means of pincers, is inserted with a snap within screw 31 obtaining a permanent coupling with the latter.

After the assembly has been completed, the presence on ring 34 of lip 37, which contrasts against the ring-shaped tooth 38 inside screw 31, prevents the slippage of ring 34.

The inner part of screw 31 and the truncated-cone part 36 of the elastic ring 34 come into contact with each other along the common slanted ring-shaped surface 39 which, contrasting against the axial stress generated by screw 31 during its tightening inside the threaded seat 40, creates a radial sealing component of ring 34 against pipe 33.

At the same time, during the tightening of screw 31 the elastic metal ring 34 presses in the vertical axial direction the plastic bushing 41 of a known type, which, because of the presence of the ring-shaped slanted contact surface 42, is stressed by a radial sealing component against pipe 33.

It can then be understood that in this case, too, the mechanical tightening and the seal of pipe 33 on the threaded seat 40 are insured.

From what has been described, it can be understood that the realization of the invention achieves all the proposed goals and also allows to obtain all the advantages which had previously been described.

In particular the sealing fitting 1 is especially suited for flexible pipes 8 made of plastic material and the mechanical tightness and the seal are guaranteed by the radial pressure against pipe 8 itself of the elastic metal ring 3, while the safety against the slippage of pipe 8 is guaranteed by the presence of the saw-tooth notches 10.

The sealing fitting 11 uses the same idea of solution and is particularly suited for the performance of connections between metal pipes 19 through the employment of ring 12 made of plastic material, where the mechanical tightness and the seal are guaranteed by the radial stress of the plastic ring 12 against pipe 19.

The sealing fitting 20, which is also suited for metal pipes, still uses the same idea of solution and is a variation of the sealing fitting 11, where the mechanical tightness and the seal are obtained through an elastic metal ring 21 and by the interposition of a bushing 22, of a known type, made of plastic material.

Finally, the sealing fitting 30 uses the same idea of solution in order to obtain the connection between a threaded seat, for instance the bottom of a collector, and a pipe 33, using in this case, too, an elastic metal ring 34 and the interposition of a bushing 41, of a known type, made of plastic material.

All the sealing fittings 1, 11, 20, 30 which have been described and which concern the same idea of solution, are characterized in that the threaded bodies 2, 14, 24, 31 are each permanently assembled with the corresponding elastic rings 3, 12, 21, 34 and constitute a single body with them. Thus both the goal of avoiding the possibility of a wrong assembly of the elastic ring within the corresponding blocking nut, and the goal of decreasing the number of components, which the operator must manipulate while performing the connections, have been reached.

**Claims**

1. A sealing fitting for pipes including:
   - a threaded body (2;14;24;31) screwed to a threaded member comprising a nipple (9, 18,27) or a threaded seat (40);
   - an elastic sealing ring (3,12,21,34) permanently coupled with the threaded body to rotate with said threaded body by means of a round collar (5,15,25, 37), in which fitting said sealing ring (3,12,21,34) is compressed to seal radially and uniformly against the pipe (8,19,29,33), without making permanent deformation in the interior of the sealed pipe, said compression action being transmitted to said elastic sealing ring by means of the pressure effected by the body and threaded member on two different slanted surfaces of said elastic sealing ring, either directly or in cooperation with a plastic bushing (22,41), during the tightening of the sealing fitting.

2. A sealing fitting for pipes according to claim 1), characterized in that one of the two slanted surfaces (7,17,50,39) of said elastic ring engages with the corresponding surface of a threaded external body, while the other slanted surface engages with the nipple (9,18) or with a bushing (22,41)placed between the elastic ring (21,34) and the nipple or the threaded seat (27,40).

3. A sealing fitting for pipes according to claim 1), characterized in said elastic ring being made of metal and having its inner surface shaped with saw-toothed ring grooves (10), the sharp gripping part of which is pointed in the opposite direction with respect to the direction of slippage of the pipe, the smooth surface pipe connected with the pipe fitting being of the flexible type, made of plastic.

4. A sealing fitting according to claim 1), characterized in that the elastic ring (7,21,34) has a transversal cut which permits the radial compression.

5. A sealing fitting according to claim 1) particularly suited for the connection of smooth pipes and threaded seats, characterized in that the external threaded body of the sealing fitting is a screw (31) fitted with an hexagonal central hole (32) for the passage of the fluid.

**Revendications**

1. Raccord de serrage pour tuyaux comprenant:
   - un corps taraudé (2;14;24;31) vissé sur un membre taraudé comprenant un bossage (9; 18; 27) ou un siège taraudé (40);
   - une bague élastique d'étanchéité (3;12;21;34) permanentement raccordée au corps taraudé et qui tourne avec le dit corps taraudé par le moyen d'un collier rond (5;15;25;37), dans lequel raccord de serrage la dite bague d'étanchéité (3;12;21;34) est comprimée pour obtenir l'étanchéité radialement et uniformement contre le tuyau (8;19;29;33), sans créer aucune déformation permanente à l'intérieur du dit tuyau étanche, la dite action de compression étant transmise à la dite bague élastique d'étanchéité par le moyen de la pression exercée par le corps et le membre taraudé sur deux differentes surfaces inclinées de la dite bague élastique d'étanchéité, et cela directement ou en coopération avec une douille (22;41) en plastique pendant l'action de serrage du raccord de serrage.

2. Raccord de serrage pour tuyaux selon la revendication 1, caractérisé en ce que une des surfaces inclinées (7;17;50;39) de la dite bague élastique s'engage avec la surface correspondente d'un corps taraudé extérieur, tandis que l'autre surface inclinée s'engage avec le bossage ou le siège taraudé (27;40).

3. Raccord de serrage pour tuyaux selon la revendication 1, caractérisé en ce que la dite bague élastique est en métal et a sa surface intérieure formée avec des rainures annulaires (10) à dents de soie, dont la partie affilée agrippante est pointée en direction opposée par rapport à la direction de dérapage du tuyau, la surface lisse du tuyau raccordée au raccord de serrage étant de type flexible et faite en plastique.

4. Raccord de serrage selon la revendication 1, caractérisé en ce que la bague élastique (7;21;34) a une coupe transversale permettant la compression radiale.

5. Raccord de serrage selon la revendication 1, particulièrement apte pour le raccordement de tuyaux lisses et de sièges taraudés, caractérisé en ce que le corps taraudé extérieur du raccord de serrage est une vis (31) logeant une ouverture centrale hexagonale (32) pour le passage du fluide.

**Patentansprüche**

1. Verbindungstück für Röhre, das folgendes einschliesst:
    - einen geschnittenen Körper (2;14;24;31), der an einem geschnittenen, ein Anschlüssstück (9, 18;27) oder einen geschnittenen Sitz (40) einschliessenden Element geschraubt ist.
    - einen elastischen Dichtungsring (3;12;21;34), der dauernd am geschnittenen Körper angeschlossen ist und mit ihm mittels eines runden Bundrings (5;15;25;37) dreht,
    wobei der genannte Dichtungsring (3;12;21;34) ins Verbindungsstück gedrückt wird, um radial und gleichmäßig gegen das Rohr (8;19;29;33) zu dichten, ohne eine dauerne Verformung innerhalb des Rohrs zu verursachen, wobei die Druckwirkung auf den genannten elastischen Dichtungsring durch den Druck, der vom Körper und dem geschnittenen Element auf zwei geneigte Oberfläche des genannten elastischen Dichtungsrings, entweder direkt oder in Zusammenwirkung mit einer Kunststoff-Büchse (22;41) während der Verschraubung des Vebindungsstücks, übertragen wird.

2. Verbindungsstück für Röhre nach Anspruch 1, dadurch gekennzeichnet, daß eine der zwei geneigten Oberflächen (7;17;50;39) des genannten elastischen Rings fällt mit einer entsprechenden Oberfläche eines geschnittenen äusseren Körpers ein, während die andere geneigte Oberfläche mit dem Anschlussstück oder mit dem geschnittenen Sitz (27; 40) einfällt.

3. Verbindungsstück für Röhre nach Anspruch 1, dadurch gekennzeichnet, daß der elastische Ring aus Metall besteht und seine innere Oberfläche sägezahnförmige runde Rillen (10) aufweist, deren scharfe, greifende Seite in entgegengesetzer Richtung in Verhältnis zur Richtung des Rutschens des Rohrs angordnet ist, wobei die glatte Oberfläche des Rohrs, die mit dem Verbindungsstück verbunden ist ein Schlauch aus Kunststoff ist.

4. Verbindungsstück nach Anspruch 1, dadurch gekennzeichnet, daß der elastische Ring (7;21;34) einen Querschnitt aufweist, der die radiale Druckspannung erlaubt.

5. Verbindungsstück nach Anspruch 1, besonders dazu geeignet, die Verbindung zwischen glatten Röhren und geschnittenen Sitzen zu ermöglichen, dadurch gekennzeichnet, daß der äussere geschnittene Körper des Verbindungsstücks eine Schraube (31) ist, die mit einer sechskantigen zentralen Bohrung (32) zum Durchgang der Flüssigkeit ausgerüstet ist.

FIG.4

5   7

71

4   10

FIG.3

2

3

9

FIG.2

1

6   8

7   5

2

3

71

10

9

FIG.1

24

FIG.13

25   21

50

FIG.12

28   23

22

FIG.11

27

FIG.10

29

26   24

22   50

20   28

27

FIG.9

FIG.8

FIG.7

FIG.17

FIG.16

FIG.6

FIG.15

FIG.5

FIG.14